# EUROPÄISCHE PATENTSCHRIFT

(11) **EP 1 646 522 B1**
(45) Veröffentlichungstag und Bekanntmachung des Hinweises auf die Patenterteilung: **19.12.2007**
(21) Anmeldenummer: 04738740.2
(22) Anmeldetag: 19.06.2004
(51) Int. Cl.: B60K 6/20, H02J 7/14

(54) **MEHRSPANNUNGS-BORDNETZ MIT EINEM MEHRSPANNUNGSGENERATORMOTOR**
MULTI-VOLTAGE VEHICLE ELECTRIC SYSTEM COMPRISING A MULTI-VOLTAGE GENERATOR MOTOR
RESEAU DE BORD MULTITENSION COMPORTANT UN MOTEUR A GENERATEUR MULTITENSION

(30) Priorität: 08.07.2003 DE 10330703
(43) Veröffentlichungstag der Anmeldung: 19.04.2006
(73) Patentinhaber: ROBERT BOSCH GMBH, 70442 Stuttgart (DE)
(72) Erfinder: EYNIUS, Dominique, 71711 Steinheim/Murr (DE); GROETER, Hans-Peter, 71665 Vaihingen (DE); RECHBERGER, Klaus, 71638 Ludwigsburg (DE)
(86) Internationale Anmeldenummer: PCT/DE2004/001291
(87) Internationale Veröffentlichungsnummer: WO 2005/005187

(56) Entgegenhaltungen:
- DE-A- 10 042 532
- DE-A- 10 059 038
- DE-A- 10 208 982
- DE-A- 19 755 050
- PENG F Z ET AL: "A magnetic-less DC-DC converter for dual voltage automotive systems" CONFERENCE RECORD OF THE 2002 IEEE INDUSTRY APPLICATIONS CONFERENCE. 37TH IAS ANNUAL MEETING . PITTSBURGH, PA, OCT. 13 - 18, 2002, CONFERENCE RECORD OF THE IEEE INDUSTRY APPLICATIONS CONFERENCE. IAS ANNUAL MEETING, NEW YORK, NY : IEEE, US, Bd. 1 OF 4. CONF. 37, 13. Oktober 2002 (2002-10-13), Seiten 1303-1310, XP010610048 ISBN: 0-7803-7420-7

## Beschreibung

Die Erfindung betrifft ein Kfz-Bordnetz mit einem Mehrspannungsgeneratormotor (Startergenerator) gemäß dem Oberbegriff des Patentanspruchs 1.

Mehrspannungs-Bordnetze umfassen in der Regel ein erstes Teilnetz mit einer niedrigen Nennspannung (z.B. 14V), an dem Verbraucher mit niedriger Leistungsaufnahme angeschlossen sind, und ein zweites Teilnetz mit einer hohen Nennspannung (z.B. 42V), an dem Hochleistungsverbraucher, wie z.B. Heizungen, eine elektrische Servolenkung, elektromotorische Bremsen, etc. angeschlossen sind. Dabei ist es bekannt, die Niederspannungsverbraucher (14V-Verbraucher) in kritischen Betriebssituationen (z.B Stoßbetrieb) wahlweise aus dem zweiten Teilnetz zu versorgen.

Das Mehrspannungs-Bordnetz umfasst ferner einen Mehrspannungsgenerator (mit variabler Gleichspannung), der zwei Teilnetze mit elektrischer Leistung versorgt. Während der Generator einerseits das Teilnetz mit höherer bzw. variabler Spannung direkt versorgt, erfolgt die Versorgung des Teilnetzes mit niedriger Spannung über einen geregelten DC/DC-Wandler. Ist die Versorgung des Teilnetzes mit hoher oder variabler Spannung nicht mehr erforderlich, wird der Generator auf die niedrigere Spannung des zweiten Teilnetzes zurückgeregelt und DC/DC-Wandler durchgeschaltet. Derartige Mehrspannungs-Bordnetze mit einem Mehrspannungsgenerator bringen eine ganze Reihe von Vorteilen für den Betrieb elektrischer Verbraucher im Fahrzeug.

Aus der DE 100 59 038 A ist ein Kraftfahrzeugbordnetz mit einem Mehrspannungsgeneratormotor bekannt, der über einen Pulswechselrichter mit einem ersten Teilbordnetz verbunden ist, in dem eine erste Nennspannung anliegt. In einem zweiten Teilbordnetz, das mit dem ersten Teilbordnetz über einen Gleichspannungswandler verbunden ist, herrscht eine geringere Nennspannung. Ein Steuergerät schaltet Batterien der beiden Teilbordnetze so an den Mehrspannungsgeneratormotor, dass ein optimaler Start möglich ist.

Die DE 102 08 982 und die DE 197 55 050 A zeigen weitere Mehrspannungsbordnetze, bei denen unterschiedliche Spannungen herrschen.

Das Starten und eine motorische Unterstützung des Verbrennungsmotors durch den Mehrspannungsgeneratormotor, insbesondere im Start-Stop-Betrieb (Stadtverkehr), ist aus dem Stand der Technik dagegen nicht bekannt.

Es ist daher die Aufgabe der vorliegenden Erfindung, ein Mehrspannungs-Bordnetz mit einem Mehrspannungsgeneratormotor zu schaffen, mit dem der Verbrennungsmotor des Fahrzeugs bei Bedarf, ohne Unterbrechung der elektrischen Versorgung, gestartet oder motorisch unterstützt werden kann.

Gelöst wird diese Aufgabe gemäß dem Oberbegriff des Patentanspruchs 1. Weitere Ausgestaltungen der Erfindung sind Gegenstand von Unteransprüchen.

Der wesentliche Gedanke der Erfindung besteht darin, ein Mehrspannungs-Bordnetz mit einem Mehrspannungsgeneratormotor zu realisieren, der eine elektrische Maschine, einen Regler und einen Pulswechselrichter umfasst, wobei der Mehrspannungsgeneratormotor an seinem Gleichspannungsausgang eine variable Nennspannung erzeugen kann, und am Ausgang des Mehrspannungsgeneratormotors einen DC/DC-Wandler anzuschließen, der die vom Mehrspannungsgeneratormotor zugeführte Gleichspannung in eine gewünschte Nennspannung (z.B. 14V) wandelt.

Erfindungsgemäß ist ein erstes Teilnetz von einer variablen Nennspannung versorgt.

Das Bordnetz umfasst vorzugsweise eine ausreichend große Energiequelle, wie z.B. einen sogenannten Supercap (Superkondensator), mit deren Hilfe der Mehrspannungsgeneratormotor auch im Motorbetrieb betrieben werden kann. Der Supercap ist vorzugsweise derart ausgelegt, dass der Energieinhalt bei Vollladung weit größer ist, als für einen Startvorgang des Verbrennungsmotors benötigt wird. Die Energie des Supercaps kann auch zur Versorgung des anderen Teilnetzes verwendet werden. Der Supercap ist vorzugsweise im Teilnetz mit der höheren Nennspannung angeordnet.

Der Pulswechselrichter hat im wesentlichen zwei Funktionen: Im Generatorbetrieb des Mehrspannungsgeneratormotors erzeugt der Pulswechselrichter eine Gleichspannung zur Versorgung des Bordnetzes und im Motorbetrieb des Mehrspannungsgeneratormotors eine mehrphasige Wechselspannung zur Versorgung des Mehrspannungsgeneratormotors. Der Pulswechselrichter wird von einem im Bordnetz angeschlossenen Steuergerät entsprechend angesteuert.

Der DC/DC-Wandler ist vorzugsweise seriell am Pulswechselrichter angeschlossen. Das erste Teilnetz mit der hohen Nennspannung ist vorzugsweise an einem Knoten zwischen Pulswechselrichter und DC/DC-Wandler angeschlossen.

Im erfindungsgemäßen Mehrspannungs-Bordnetz mit Mehrspannungsgeneratormotor können mehrere Betriebsmodi unterschieden werden:

### 1. Generatorbetrieb

Im "Normalbetrieb" wird der Pulswechselrichter derart angesteuert, dass an seinem Gleichspannungsausgang die niedrige Nennspannung anliegt. Der dem Pulswechselrichter nachgeschaltete DC/DC-Wandler ist in diesem Fall durchgeschaltet.

Im "Hochspannungs-Betrieb" wird der Pulswechselrichter derart angesteuert, dass an seinem Gleichspannungsausgang die hohe Nennspannung anliegt. Der Hochspannungs-Betrieb wird eingestellt, wenn Hochleistungsverbraucher betrieben werden sollen. Dabei kann durch Energiemanagement, d.h. insbesondere durch Regelung des Wandlers, sichergestellt werden, dass die Versorgung des Teilnetzes mit niedrigeren Spannung nicht unterbrochen wird. Das Teilnetz mit der niedrigen Versorgungsspannung kann z.B. aus dem anderen Teilnetz versorgt werden.

### 2. Motorbetrieb

Im Motorbetrieb des Mehrspannungsgeneratormotors wird der Pulswechselrichter derart angesteuert, dass der Mehrspannungsgeneratormotor den Verbrennungsmotor antreibt. Der Verbrennungsmotor kann dadurch beispielsweise gestartet oder, z.B. in einem Turboloch, motorisch unterstützt werden. In dieser Phase kann durch Energiemanagement sichergestellt werden, dass die Versorgung des Teilnetzes mit niedrigeren Spannung nicht unterbrochen wird.

### 3. Rekuperationsbetrieb

Im Rekuperationsbetrieb (d.h. Umwandlung kinetischer Energie in Fahrzeugverzögerungsphasen, wie z.B. beim Bremsen oder Ausrollen des Fahrzeugs, in elektrische Energie) wird der Mehrspannungsgeneratormotor vorzugsweise auf Abgabe maximaler Leistung und somit Erzeugung eines maximalen Bremsmoments geregelt. Der Pulswechselrichter erzeugt in diesem Fall an seinem Gleichspannungsausgang vorzugsweise die hohe Nennspannung. Die so gewonnene überschüssige elektrische Energie wird vorzugsweise im Supercap gespeichert. Die gespeicherte Energie steht dann z.B. für einen darauf folgenden Startvorgang des Verbrennungsmotors (z.B: Start-Stopp-Betrieb) oder für zusätzliches Antriebsmoment (z.B. Ampelstart, Beschleunigung) oder für einen Stoßbetrieb (z.B. Schnellheizung) elektrischer Verbraucher zur Verfügung.

Die Erfindung wird nachstehend anhand der beigefügten Zeichnung beispielhaft näher erläutert.

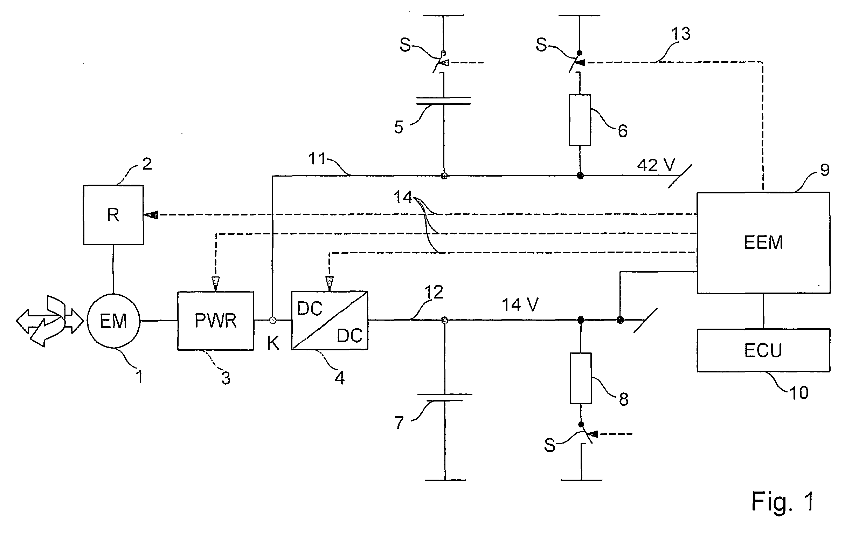

Fig. 1 zeigt ein Ausführungsbeispiel eines Mehrspannungs-Bordnetzes mit einem Mehrspannungsgeneratormotor, umfassend eine elektrische Maschine 1, einen Regler 2 und einen Pulswechselrichter 3. Die elektrische Maschine 1 ist mit dem Verbrennungsmotor (nicht gezeigt) des Fahrzeugs mechanisch verkoppelt und kann entweder im Generatorbetrieb oder im Motorbetrieb betrieben werden.

Das Mehrspannungs-Bordnetz umfasst ein erstes Teilnetz 11 mit einer hohen festen oder variablen Nennspannung, im vorliegenden Fall eine 42V Nennspannung, sowie ein zweites Teilnetz 12 mit einer niedrigen Nennspannung, im vorliegenden Fall eine 14V Nennspannung. In den Teilnetzen 11,12 sind mehrere Verbraucher 6,8 angeschlossen, die hier exemplarisch als ein Verbraucher 6 bzw. 8 dargestellt sind. Die Verbraucher 6,8 können mittels der Schalter S von einem Steuergerät 9 ein- und ausgeschaltet werden. Das Steuergerät 9 dient u. a. zur Durchführung eines elektrischen Energie- und Verbrauchermanagements.

Das Mehrspannungs-Bordnetz umfasst ferner einen am Pulswechselrichter 3 seriell angeschlossenen DC/DC-Wandler 4. Der DC/DC-Wandler 4 ist vorzugsweise als Längsspannungsregler realisiert.

Das 14V-Teilnetz 12 umfasst ferner eine Batterie 7, und das 42V-Teilnetz 11 einen Supercap 5 zur Speicherung elektrischer Energie. Das Teilnetz 11 mit 42V Nennspannung ist an einem Knoten K zwischen Pulswechselrichter 3 und DC/DC-Wandler 4, direkt am Ausgang des Pulswechselrichters 3 angeschlossen.

Die elektrische Maschine 1 wird von einem Generatorregler 2 geregelt. Regler 2, Pulswechselrichter 3 und DC/DC-Wandler sind mit dem Steuergerät 9 über Steuerleitungen 14 verbunden. Das Steuergerät 9 steht ferner mit einer Motorsteuerung 10 in Verbindung.

Die Läuferwicklung der elektrischen Maschine ist vorzugsweise mit dem ersten Teilnetz 11 verbunden und kann somit z.B. aus dem Supercap 5 mit Energie versorgt werden. Auf diese Weise kann z.B. im Generatorbetrieb eine Entregung der Maschine bei Lastsprüngen (sogenanntes "Ausblasen") verhindert werden.

Die Läuferwicklung der elektrischen Maschine 1 wird vorzugsweise auch aus dem 14V-Bordnetz mit elektrischer Energie versorgt. In diesem Fall besteht eine redundante Energieversorgung der Läuferwicklung der elektrischen Maschine durch zwei Energiespeicher 5 bzw. 7, wodurch insbesondere die Ausfallsicherheit des Mehrspannungsgeneratormotors 1,2,3 verbessert werden kann.

Mit der in Fig. 1 dargestellten Konfiguration des Fahrzeug-Bordnetzes sind verschiedene Betriebsarten einstellbar, um den Mehrspannungsgeneratormotor 1,2,3 wahlweise im Generatorbetrieb oder im Motorbetrieb zu betreiben. Im Generatorbetrieb werden die Verbraucher 6,8 mit elektrischer Leistung versorgt und die Energiespeicher 5,7 aufgeladen. Im Motorbetrieb kann der Verbrennungsmotor (nicht gezeigt) gestartet oder motorisch unterstützt werden.

### 1. Generatorbetrieb

### 1.1. Normalbetrieb

Im Normalbetrieb erzeugt der Pulswechselrichter 3 an seinem Gleichspannungsausgang die niedrige Nennspannung (14V) zur Versorgung des 14V-Bordnetzes. Der DC/DC-Wandler 4 ist in dieser Betriebsart durchgeschaltet. Pulswechselrichter 3 und DC/DC-Wandler 4 werden vom Steuergerät 9 in entsprechender Weise angesteuert.

### 1.2. 42V-Betrieb

Zum Betrieb eines 42V-Verbrauchers 6 (42V-Betrieb) erzeugt der Pulswechselrichter 3 an seinem Gleichspannungsausgang die 42V-Nennspannung. Der DC/DC-Wandler 4 wandelt die 42V-Nennspannung in eine 14V-Nennspannung zur Versorgung des zweiten Teilnetzes 12.

### 1.3. Rekuperationsbetrieb

Im Rekuperationsbetrieb (d.h. Umwandlung kinetischer Energie in Fahrzeugverzögerungsphasen, wie z.B. beim Bremsen oder Ausrollen des Fahrzeugs, in elektrische Energie), wird der Mehrspannungsgeneratormotor auf maximale Energieabgabe und somit maximales Drehmoment (Bremsmoment) geregelt. Der Pulswechselrichter 3 erzeugt an seinem Gleichspannungsausgang (Knoten K) die hohe Nennspannung von 42V. Die so gewonnene Energie wird im Supercap 5 und in der Batterie 7 gespeichert und steht somit für einen nachfolgenden Startvorgang des Verbrennungsmotors, für die Unterstützung des Verbrennungsmotors im Fahrbetrieb oder den Stoßbetrieb eines Verbrauchers 6 oder 8 zur Verfügung. Im Stoßbetrieb kann beispielsweise eine Heizvorrichtung stoßartig mit Energie versorgt werden, um ein schnelles Aufheizen zu bewirken.

Der Supercap 5 ist vorzugsweise derart ausgelegt, dass der Energieinhalt bei Volladung weit größer ist als für einen Startvorgang des Verbrennungsmotors benötigt wird. Die im Supercap 5 gespeicherte Energie kann über den DC/DC-Wandler 4 z.B. auch an das 14V-Bordnetz 12 geliefert werden. Im Rekuperationsbetrieb werden Regler 2, Pulswechselrichter 3 und DC/DC-Wandler 4 entsprechend vom Steuergerät 9 angesteuert.

### 2. Motorbetrieb

Im Motorbetrieb wird die elektrische Maschine 1 über den Pulwechselrichter 3 mit elektrischer Leistung versorgt. Der Verbrennungsmotor kann somit gestartet oder z.B. in einem Turboloch motorisch unterstützt werden. Die entsprechende Steuerung des Pulswechselrichters 3 und des Reglers 2 erfolgt durch das Steuergerät 9.

### Bezugszeichenliste

- 1: Elektrische Maschine
- 2: Regler
- 3: Pulswechselrichter
- 4: DC/DC-Wandler
- 5: Supercap
- 6: Hochspannungs-Verbraucher
- 7: Batterie
- 8: Niederspannungs-Verbraucher
- 9: Steuergerät
- 10: Motorsteuerung
- 11: Erstes Teilnetz
- 12: Zweites Teilnetz
- 13: Steuerleitung
- 14: Steuerleitungen
- S: Schalter
- K: Knoten

## Patentansprüche

1. Kraftfahrzeug-Bordnetz mit einem Mehrspannungsgeneratormotor (1, 2, 3), der eine elektrische Maschine (1), einen Regler (2) und einen Pulswechselrichter (3) umfasst, zur elektrischen Versorgung eines ersten Teilnetzes (11) mit wenigstens einem ersten Verbraucher (6), in dem eine erste Nennspannung (42V) anliegt und eines zweiten Teilnetzes (12) mit wenigstens einem zweiten Verbraucher (8), in dem eine zweite Nennspannung (14V) anliegt und einen dem Mehrspannungsgeneratormotor (1, 2, 3) nachgeordneten DC/DC-Wandler und einem Steuergerät (9), **dadurch gekennzeichnet, dass** das erste Teilnetz (11) mit einer variablen Spannung (>14V) vorsorgt ist.

2. Kraftfahrzeug-Bordnetz nach Anspruch 1, **dadurch gekennzeichnet, dass** das erste Teilnetz (11) am Ausgang (K) des Pulswechselrichters (3) angeschlossen ist.

3. Kraftfahrzeug-Bordnetz nach Anspruch 1 oder 2, **dadurch gekennzeichnet, dass** der DC/DC-Wandler (4) seriell am Pulswechselrichter (3) angeschlossen ist.

4. Kraftfahrzeug-Bordnetz nach einem der vorhergehenden Ansprüche, **dadurch gekennzeichnet, dass** der DC/DC-Wandler (4) ein Längsspannungsregler ist.

5. Kraftfahrzeug-Bordnetz nach einem der vorhergehenden Ansprüche, **dadurch gekennzeichnet, dass** im ersten Teilnetz (11) ein Superkondensator (5) als Energiespeicher angeordnet ist.

6. Kraftfahrzeug-Bordnetz nach einem der vorhergehenden Ansprüche, **dadurch gekennzeichnet, dass** das Steuergerät (9) den Pulswechselrichter (3) derart ansteuern kann, dass wahlweise die erste oder die zweite Nennspannung am Ausgang des Pulswechselrichters (3) ausgegeben wird.

7. Kraftfahrzeug-Bordnetz nach einem der vorhergehenden Ansprüche, **dadurch gekennzeichnet, dass** das Steuergerät (9) den Pulswechselrichter (3) im Normalbetrieb derart ansteuert, dass der Pulswechselrichter (3) die niedrige Nennspannung ausgibt.

8. Kraftfahrzeug-Bordnetz nach Anspruch 7, **dadurch gekennzeichnet, dass** der DC/DC-Wandler (4) im Normalbetrieb durchgeschaltet ist.

9. Kraftfahrzeug-Bordnetz nach einem der vorhergehenden Ansprüche, **dadurch gekennzeichnet, dass** das Steuergerät (9) den Pulswechselrichter (3) im Rekuperationsbetrieb derart ansteuert, dass der Pulswechselrichter (9) eine hohe Gleichspannung ausgibt, und den Generatorregler (2) derart ansteuert, dass die elektrische Maschine (1) ein maximales Drehmoment aufweist.

10. Kraftfahrzeug-Bordnetz nach einem der vorhergehenden Ansprüche, **dadurch gekennzeichnet, dass** das Steuergerät (9) den Pulswechselrichter (3) in einem Motorbetrieb derart ansteuert, dass die elektrische Maschine (1) den Verbrennungsmotor motorisch unterstützt.

11. Kraftfahrzeug-Bordnetz nach einem der vorhergehenden Ansprüche, **dadurch gekennzeichnet, dass** das Steuergerät (9) den Pulswechselrichter (3) in einem Motorbetrieb derart ansteuert, dass die elektrische Maschine (1) den Verbrennungsmotor eigenständig startet.

12. Kraftfahrzeug-Bordnetz nach einem der Ansprüche 1 bis 10, **dadurch gekennzeichnet, dass** das Steuergerät (9) den Pulswechselrichter (3) in einem Motorbetrieb derart ansteuert, dass die elektrische Maschine (1) einen zusätzlichen Starter beim Starten des Verbrennungsmotors unterstützt.

## Claims

1. On-board motor vehicle electrical system having a multivoltage generator motor (1, 2, 3), which comprises an electrical machine (1), a regulator (2) and a pulse-controlled inverter (3), for supplying electrical power to a first sub-network (11) with at least one first load (6), in which a first rated voltage (42 V) is produced, and to a second sub-network (12) with at least one second load (8), in which a second rated voltage (14 V) is produced, and a DC/DC converter which is arranged downstream of the multivoltage generator motor (1, 2, 3) and a control apparatus (9), **characterized in that** the first sub-network (11) is provided with a variable voltage (>14 V).

2. On-board motor vehicle electrical system according to Claim 1, **characterized in that** the first sub-network (11) is connected to the output (K) of the pulse-controlled inverter (3).

3. On-board motor vehicle electrical system according to Claim 1 or 2, **characterized in that** the DC/DC converter (4) is connected in series to the pulse-controlled inverter (3).

4. On-board motor vehicle electrical system according to one of the preceding claims, **characterized in that** the DC/DC converter (4) is a series voltage regulator.

5. On-board motor vehicle electrical system according to one of the preceding claims, **characterized in that** a supercapacitor (5) is arranged in the first sub-network (11) as the energy-storage means.

6. On-board motor vehicle electrical system according to one of the preceding claims, **characterized in that** the control apparatus (9) can drive the pulse-controlled inverter (3) in such a way that the first or the second rated voltage can selectively be emitted at the output of the pulse-controlled inverter (3).

7. On-board motor vehicle electrical system according to one of the preceding claims, **characterized in that** the control apparatus (9) drives the pulse-controlled inverter (3) in the normal mode in such a way that the pulse-controlled inverter (3) emits the low rated voltage.

8. On-board motor vehicle electrical system according to Claim 7, **characterized in that** the DC/DC converter (4) is connected in the normal mode.

9. On-board motor vehicle electrical system according to one of the preceding claims, **characterized in that** the control apparatus (9) drives the pulse-controlled inverter (3) in the recuperation mode in such a way that the pulse-controlled inverter (9) emits a high DC voltage, and drives the generator regulator (2) in such a way that the electrical machine (1) has a maximum torque.

10. On-board motor vehicle electrical system according to one of the preceding claims, **characterized in that** the control apparatus (9) drives the pulse-controlled inverter (3) in a motor mode in such a way that the electrical machine (1) assists the internal combustion engine in motor terms.

11. On-board motor vehicle electrical system according to one of the preceding claims, **characterized in that** the control apparatus (9) drives the pulse-controlled inverter (3) in a motor mode in such a way that the electrical machine (1) independently starts the internal combustion engine.

12. On-board motor vehicle electrical system according to one of Claims 1 to 10, **characterized in that** the control apparatus (9) drives the pulse-controlled inverter (3) in a motor mode in such a way that the electrical machine (1) assists an additional starter when the internal combustion engine is started.

## Revendications

1. Réseau embarqué de véhicule automobile comportant un générateur moteur multi-tension 1, 2, 3 avec une machine électrique 1, un régulateur 2 et un onduleur impulsionnel 3 pour l'alimentation électrique d'une première partie de réseau 11 comportant au moins un premier utilisateur 6 et ayant une première tension nominale 42V et une seconde partie de réseau 12 avec au moins un second utilisateur 8 et ayant une seconde tension nominale 14V ainsi qu'un convertisseur continu/continu en aval du générateur moteur multi-tension 1, 2, 3 et un appareil de commande 9,
**caractérisé en ce que**
la première partie de réseau 11 est alimentée avec une tension variable > 14V.

2. Réseau embarqué de véhicule automobile selon la revendication 1,
**caractérisé en ce que**
la première partie de réseau 11 est reliée à la sortie K de l'onduleur impulsionnel 3.

3. Réseau embarqué de véhicule automobile selon l'une quelconque des revendications 1 ou 2,
**caractérisé en ce que**
le convertisseur continu/continu 4 est relié en série à l'onduleur impulsionnel 3.

4. Réseau embarqué de véhicule automobile selon l'une quelconque des revendications précédentes,
**caractérisé en ce que**
le convertisseur continu/continu 4 est un régulateur de tension longitudinale.

5. Réseau embarqué de véhicule automobile selon l'une quelconque des revendications précédentes,
**caractérisé en ce que**
la première partie de réseau 11 comporte un super condensateur 5 comme accumulateur d'énergie.

6. Réseau embarqué de véhicule automobile selon l'une quelconque des revendications précédentes,
**caractérisé en ce que**
l'appareil de commande 9 commande l'onduleur impulsionnel 3 pour fournir au choix la première ou la seconde tension nominale à la sortie de l'onduleur impulsionnel 3.

7. Réseau embarqué de véhicule automobile selon l'une quelconque des revendications précédentes,
**caractérisé en ce que**
l'appareil de commande 9 agit sur l'onduleur impulsionnel 3 en fonctionnement normal pour que l'onduleur impulsionnel 3 fournisse la tension nominale la plus faible.

8. Réseau embarqué de véhicule automobile selon la revendication 7,
**caractérisé en ce que**
le convertisseur continu/continu 4 est commuté en mode de fonctionnement normal.

9. Réseau embarqué de véhicule automobile selon l'une quelconque des revendications précédentes,
**caractérisé en ce que**
l'appareil de commande 9 agit sur l'onduleur impulsionnel 3 en mode de récupération pour qu'il fournisse une tension continue de niveau élevé et commande le régulateur de générateur 2 pour que la machine électrique 1 fournisse le couple maximum.

10. Réseau embarqué de véhicule automobile selon l'une quelconque des revendications précédentes,
**caractérisé en ce que**
l'appareil de commande 9 agit sur l'onduleur impulsionnel 3 pendant le fonctionnement du moteur pour que la machine électrique 1 assiste par entraînement, le moteur à combustion.

11. Réseau embarqué de véhicule automobile selon l'une quelconque des revendications précédentes,
**caractérisé en ce que**
l'appareil de commande 9 agit sur l'onduleur impulsionnel 3 en mode moteur pour que la machine électrique 1 démarre le moteur à combustion interne de manière autonome.

12. Réseau embarqué de véhicule automobile selon l'une quelconque des revendications 1 à 10,
**caractérisé en ce que**
l'appareil de commande 9 agit sur l'onduleur impulsionnel 3 pendant le fonctionnement du moteur pour que la machine électrique 1 renforce un démarreur supplémentaire au démarrage du moteur à combustion interne.
